# EUROPÄISCHE PATENTSCHRIFT

(11) **EP 4 237 485 B1**
(45) Veröffentlichungstag und Bekanntmachung des Hinweises auf die Patenterteilung: **26.02.2025**
(21) Anmeldenummer: 21805872.5
(22) Anmeldetag: 29.10.2021
(51) Int. Cl.: C08K 5/544, C09J 171/02, C09J 183/04, C08G 65/336

(54) **THERMOBESCHLEUNIGTE KLEBSTOFFZUSAMMENSETZUNGEN AUF BASIS SILANTERMINIERTER POLYMERE**
THERMALLY ACCELERATED ADHESIVE COMPOSITIONS BASED ON SILANE-TERMINATED POLYMERS
COMPOSITIONS ADHÉSIVES À EFFET THERMO-ACCÉLÉRÉ À BASE DE POLYMÈRES À TERMINAISON SILANE

(30) Priorität: 30.10.2020 DE 102020128608
(43) Veröffentlichungstag der Anmeldung: 06.09.2023
(73) Patentinhaber: Kleiberit SE & Co. KG, 76356 Weingarten (DE)
(72) Erfinder: BECKER-WEIMANN, Klaus, 76530 Baden-Baden (DE); FRANK, Patrick, 76149 Karlsruhe (DE); WUNDERLICH, Steffen, 69126 Heidelberg (DE)
(74) Vertreter: Büchel, Edwin
(86) Internationale Anmeldenummer: PCT/EP2021/080117
(87) Internationale Veröffentlichungsnummer: WO 2022/090462

(56) Entgegenhaltungen:
- EP-B1- 3 475 365
- EP-B1- 3 494 188
- WO-A1-2019/115021
- CN-A- 106 367 005

## Beschreibung

Die vorliegende Erfindung betrifft eine reaktive Einkomponenten-Klebstoffzusammensetzung, welche bei Raumtemperatur flüssig ist und bezogen auf das Gesamtgewicht der Zusammensetzung 3 Gew.-% bis 90 Gew.-% mindestens eines alpha-Silan-terminierten organischen Polymers, 0 Gew.-% bis 80 Gew.-% mindestens eines Siliconharzes, 0,1 Gew.-% bis 5 Gew.-% mindestens eines Thermobeschleunigers, wobei der mindestens eine Thermobeschleuniger ein Salz eines bicyclischen tertiären Amins der folgenden Formel (II) ist: 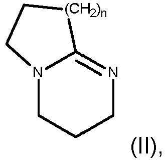 worin n eine ganze Zahl von 1 bis 3 ist, 0,001 Gew.-% bis 5 Gew.-% mindestens eines niedermolekularen Silans, das eine primäre oder sekundäre Aminogruppe oder eine geblockte Aminogruppe, die zu der primären oder sekundären Aminogruppe hydrolysiert, aufweist, wobei das niedermolekulare Silan ein Molekulargewicht im Bereich von 100 bis 500 g/mol aufweist, und 0 Gew.-% bis 85 Gew.-% mindestens eines Füllstoffes enthält. Die Erfindung betrifft weiterhin ein Verfahren zum Verkleben zweier Substrate mit Hilfe dieser Klebstoffzusammensetzung sowie ein derart verklebtes System.

Thermobeschleunigbare Reaktivklebstoffe werden im industriellen Umfeld breit eingesetzt, um den Anforderungen einer oft prozessbedingt relativ langen Einlegezeit und einer verhältnismä-ßig schnellen Aushärtung und somit Weiterverarbeitbarkeit (z. B. Sägen) gerecht zu werden. Typische Anwendungsgebiete sind die Herstellung von Dämmstoffpaneelen mit Metalldecklagen. Die Aushärtung erfolgt dabei in einer beheizten Presse, wodurch die chemische Aushärtung beschleunigt wird. Da in vielen Anwendungen Substrate geklebt werden, die deutlich unterschiedliche Ausdehnungskoeffizienten aufweisen, darf die Presstemperatur in diesem Fall nicht zu hoch sein, um ein Aufschüsseln des Verbundes zu vermeiden. Im Bereich der 2K-Polyurethanklebstoffe werden thermolabile Beschleuniger eingesetzt, wie sie beispielsweise durch die Tosoh Corporation unter der Handelsbezeichnung Toyocat^{®} erhältlich sind.

Die Isocyanatkomponente dieser Klebstoffe basiert in der Regel auf (polymeren) Methylendiphenyldiisocyanat (MDI). Der Umgang mit monomerem MDI wurde aufgrund seiner sensibilisierenden Wirkung in der jüngsten Vergangenheit unter REACH beschränkt, wie sich dies aus den Beschränkungsvorschlägen der European Chemicals Agency ergibt.

Die Verarbeitung von 2K-Klebstoffen erfolgt in der Regel mittels einer Misch- und Dosieranlage, wobei das vorgegebene Mischungsverhältnis im Prozess stets eingehalten werden muss. Abweichungen vom vorgegebenen Mischungsverhältnis können Qualitätsmängel mit sich bringen. Typische Auftragsmethoden sind der Sprüh- oder Raupenauftrag mittels einer Gießharke. Beim Sprühauftrag bildet sich ein Sprühnebel, der in die Umgebung freigesetzt werden kann und somit im Arbeitsschutz berücksichtigt werden muss. Beim Raupenauftrag mittels Gießharke kann sich das reaktive Gemisch in der Gießharke mit zunehmender Laufzeit anreichern und somit ein Zusetzen der Gießharke verursachen. Dieser Effekt tritt insbesondere verstärkt auf, wenn Gießharke und Klebstoff schlecht aufeinander abgestimmt sind.

Alternativ werden feuchtigkeitsvernetzende 1K-Polyurethanklebstoffe eingesetzt. Nachteilig bei diesem Verfahren ist jedoch, dass sich beim Aushärten CO₂ bildet, das während dem Pressvorgang abgeführt werden muss. Beim Unterschreiten der Presszeit bzw. bei zu geringem Feuchtegehalt ist ein sogenanntes Nachtreiben möglich, das zu Fehlstellen bzw. zu verringerter Festigkeit im Verbund führen kann.

Silanbasierte Schmelzklebstoffe sind in der deutschen Patentanmeldung mit der Anmeldenummer 102020111278.5 beschrieben.

Eine weitere Anforderung bei der Herstellung von Paneelen, die beispielsweise im Gebäude-, Schiffs- oder Eisenbahnbereich eingesetzt werden, ist darüber hinaus der Brandschutz. Ein Klebstoff, der in diesen beispielhaften Bereichen zum Einsatz kommt und gemäß DIN EN 13501:2019-05 die Klasse A2 erfüllt, darf bezugnehmend auf einen inneren nichtsubstantiellen Bestandteil eines Bauproduktes nach EN ISO 1716 (2018-10) einen maximalen Brennwert von 4 MJ/m² aufweisen. Schwerbrennbare Polyurethanklebstoffe mit geringen Brennwert von unter 15 MJ/kg sind beispielsweise in WO 03/051954 A1 beschrieben.

Ein weiteres Anwendungsgebiet, bei der flüssige Reaktivlebstoffe einem thermischen Aushärteprozess ausgesetzt sind, ist die Herstellung von Dachhimmeln im Automobilbereich oder die Herstellung von Paneelen. In US 5,007,976 A ist ein Verfahren beschrieben, in dem mittels eines MDI basierenden 1K Polyurethanklebstoffes ein Sandwichverbund bestehend aus Schaumstoffkern, Glasfaser und Stoffdecklage bei Temperaturen über 90 °C gepresst werden. Eine Aufgabe der vorliegenden Erfindung ist es, eine thermobeschleunigbare Klebstoffzusammensetzung bereitzustellen, die isocyanatfrei ist, beim Aushärten kein Gas entwickelt, einkomponentig ist und vorteilhafterweise einen vergleichsweise geringen Brennwert aufweist.

EP3494188B1 offenbart eine vernetzbare Beschichtungsmasse enthaltend ein silanfunktionelles Polymer, ein Silikonharz, ein Aminosilan und DBU.

Die Aufgabe wird gelöst durch eine reaktive Einkomponenten-Klebstoffzusammensetzung, welche bei Raumtemperatur flüssig ist, bezogen auf das Gesamtgewicht der Zusammensetzung enthaltend
a) 3 Gew.-% bis 90 Gew.-% mindestens eines alpha-Silan-terminierten organischen Polymers;
b) 0 Gew.-% bis 80 Gew.-% mindestens eines Siliconharzes;
c) 0,1 Gew.-% bis 5 Gew.-% mindetsnes eines Thermobeschleunigers, wobei der mindestens eine Thermobeschleuniger ein Salz eines bicyclischen tertiären Amins der folgenden Formel (II) ist: 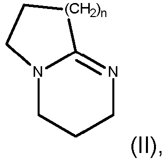 worin n eine ganze Zahl von 1 bis 3 ist;
d) 0,001 Gew.-% bis 5 Gew.-% mindestens eines niedermolekularen Silans, das eine primäre oder sekundäre Aminogruppe oder eine geblockte Aminogruppe, die zu der primären oder sekundären Aminogruppe hydrolysiert, aufweist, wobei das niedermolekulare Silan ein Molekulargewicht im Bereich von 100 bis 500 g/mol aufweist;
e) 0 Gew.-% bis 85 Gew.-% mindestens eines Füllstoffes.

Die Aufgabe wird auch gelöst durch ein Verfahren zur Verklebung zweier Substrate, die Schritte enthaltend
(a) Aufbringen einer erfindungsgemäßen reaktiven Einkomponenten-Klebstoffzusammensetzung auf ein erstes Substrat zur Erzeugung einer Klebefläche,
(b) In Kontakt bringen eines zweiten Substartes mit der Klebefläche aus Schritt (a) und
(c) thermisches Aushärten der Klebstoffzusammensetzung, vorzugsweise bei einer Temperatur von mindestens 50°C.

Die Aufgabe wird auch gelöst von einem verklebten Substratsystem aus zwei Substraten, wobei die beiden Substrate eine gemeinsame Klebefläche aufweisen, mittels derer die beiden Substrate mit Hilfe einer erfindungsgemäßen thermoausgehärteten Klebstoffzusammensetzung, insbesondere nach dem erfindungsgemäßen Verfahren, verklebt sind.

Überraschenderweise hat sich gezeigt, dass die Verklebung zweier Substrate, insbesondere zur Herstellung von Sandwichelementen mittels der erfindungsgemäßen Klebstoffzusammensetzung industriellen Taktzeiten gerecht wird. Die erfindungsgemäße Klebstoffzusammensetzung zeichnet sich durch ihre einfache Verarbeitung, ihrem breiten Haftungsspektrum und ihrer geruchsarmen Aushärtung in vielen Anwendungen aus, insbesondere im Automobil- und Baubereich, wo bestehende lösemittel- oder isocyanathaltige Klebstoffe ersetzt (z. B. Dichtstoffe, Bodenbelagsklebstoffe, Montageklebstoffe) werden müssen. Die schnelle Durchhärtung ermöglicht viele industrielle Anwendungen. Entsprechend betrifft die vorliegende Erfindung auch die Verwendung einer erfindungsgemäßen Klebstoffzusammensetzung im Automobil- und Baubereich.

Es hat sich weiterhin überraschenderweise gezeigt, dass mit einer Mischung enthaltend sogenannte alpha-Silane (α-Silane) und optional Siliconharzen, wie sie in WO 2003/014 226 A1, WO 2010/066 826 A1 oder WO 2013/026 654 A1 beschrieben werden, in Kombination mit einem thermolabilen Beschleuniger, wie er in DE 60 116 825 T2 beschrieben ist, in Anwesenheit eines niedermolekularen Silans und gegebenenfalls Füllstoffen und weiteren Additiven die Aufgabe zufriedenstellend gelöst werden kann.

Es kann so durch ein gängiges Verfahren zur Verklebung zweier Substrate Dachhimmel für Kraftfahrzeuge hergestellt werden. Dementsprechend betrifft ein weiterer Aspekt der vorliegenden Erfindung das erfindungsgemäße Verfahren zur Verklebung zweier Substrate, wobei das erhältliche verklebte Substratsystem Dachhimmel für Kraftfahrzeuge darstellt. Entsprechend können erfindungsgemäße Substratsysteme Dachhimmel für Kraftfahrzeuge sein.

Die erfindungsgemäße reaktive Einkomponenten-Klebstoffzusammensetzung unterscheidet sich somit von Zweikomponentenklebstoffen und von Beschichtungsmitteln für Oberflächen. Zudem ist die erfindungsgemäße reaktive Einkomponenten-Klebstoffzusammensetzung bei Raumtemperatur flüssig, was diese von Schmelzklebstoffen unterscheidet, die bei Raumtemperatur fest sind. Im Rahmen der vorliegenden Erfindung wird der Begriff "flüssig" entsprechend in Abgrenzung zu "fest" betrachtet. In jedem Fall sollte eine maximale Viskosität von 1000 Pa*s bei 20 UPM, 25 °C Brookfield Methode nicht überschritten werden.

Die erfindungsgemäße reaktive Einkomponenten-Klebstoffzusammensetzung ist vorzugsweise frei von monomeren Isocyanaten. Im Rahmen der vorliegenden Erfindung bedeutet "frei von monomeren Isocyanaten" einen Anteil von weniger als 1 Gew.-% bezogen auf die Gesamtmange der Zusammensetzung. Vorzugsweise beträgt der Anteil < 0,1 Gew.-%.

Vorzugsweise enthält die erfindungsgemäße reaktive Einkomponenten-Klebstoffzusammensetzung bezogen auf das Gesamtgewicht der Zusammensetzung:
a) 3 Gew.-% bis 90 Gew.-% des mindestens einen alpha-Silan-terminierten organischen Polymers;
b) 0 Gew.-% bis 50 Gew.-% des mindestens einen Siliconharzes;
c) 0,1 Gew.-% bis 5 Gew.-% des mindestens einen Thermobeschleunigers;
d) 0,001 Gew.-% bis 5 Gew.-% des mindestens einen niedermolekularen Silans, das eine primäre oder sekundäre Aminogruppe oder eine geblockte Aminogruppe, die zu der primären oder sekundären Aminogruppe hydrolysiert, aufweist;
e) 0 Gew.-% bis 80 Gew.-% des mindestens einen Füllstoffes.

Mehr bevorzugt enthält die erfindungsgemäße reaktive Einkomponenten-Klebstoffzusammensetzung bezogen auf das Gesamtgewicht der Zusammensetzung:
a) 3 Gew.-% bis 50 Gew.-% des mindestens einen alpha-Silan-terminierten organischen Polymers;
b) 1 Gew.-% bis 30 Gew.-% des mindestens einen Siliconharzes;
c) 0,1 Gew.-% bis 2,5 Gew.-% des mindestens einen Thermobeschleunigers;
d) 0,01 Gew.-% bis 5 Gew.-% des mindestens einen niedermolekularen Silans, das eine primäre oder sekundäre Aminogruppe oder eine geblockte Aminogruppe, die zu der primären oder sekundären Aminogruppe hydrolysiert, aufweist;
e) 10 Gew.-% bis 80 Gew.-% des mindestens einen Füllstoffes.

Weiter mehr bevorzugt enthält die erfindungsgemäße reaktive Einkomponenten-Klebstoffzusammensetzung bezogen auf das Gesamtgewicht der Zusammensetzung:
a) 5 Gew.-% bis 25 Gew.-% des mindestens einen alpha-Silan-terminierten organischen Polymers;
b) 5 Gew.-% bis 20 Gew.-% des mindestens einen Siliconharzes;
c) 0,1 Gew.-% bis 1 Gew.-% des mindestens einen Thermobeschleunigers;
d) 0,1 Gew.-% bis 4 Gew.-% des mindestens einen niedermolekularen Silans, das eine primäre oder sekundäre Aminogruppe oder eine geblockte Aminogruppe, die zu der primären oder sekundären Aminogruppe hydrolysiert, aufweist;
e) 30 Gew.-% bis 80 Gew.-% des mindestens einen Füllstoffes.

Weiter mehr bevorzugt enthält die erfindungsgemäße reaktive Einkomponenten-Klebstoffzusammensetzung bezogen auf das Gesamtgewicht der Zusammensetzung:
a) 15 Gew.-% bis 25 Gew.-% des mindestens einen alpha-Silan-terminierten organischen Polymers;
b) 10 Gew.-% bis 12 Gew.-% des mindestens einen Siliconharzes;
c) 0,2 Gew.-% bis 0,5 Gew.-% des mindestens einen Thermobeschleunigers;
d) 1 Gew.-% bis 3 Gew.-% des mindestens einen niedermolekularen Silans, das eine primäre oder sekundäre Aminogruppe oder eine geblockte Aminogruppe, die zu der primären oder sekundären Aminogruppe hydrolysiert, aufweist;
e) 59,5 Gew.-% bis 73,8 Gew.-% des mindestens einen Füllstoffes.

Die erfindungsgemäße reaktive Einkomponenten-Klebstoffzusammensetzung enthält die Komponenten a) bis e), wobei die Komponenten b) und e) optional sind (0 Gew.-%). Dementsprechend enthält die erfindungsgemäße reaktive Einkomponenten-Klebstoffzusammensetzung die Komponenten a), c), d) oder die Komponenten a), b) mit ≥ 0,1 Gew.-%, c), d) oder die Komponenten a), c) d), e) mit ≥ 0,1 Gew.-% oder die Komponenten a), b) mit ≥ 0,1 Gew.-%, c), d) e) mit ≥ 0,1 Gew.-%.

Darüber hinaus kann die erfindungsgemäße Zusammensetzung weitere Bestandteile aufweisen. Dementsprechend betrifft eine Ausführungsform der vorliegenden Erfindung eine erfindungsgemäße reaktive Einkomponenten-Klebstoffzusammensetzung, die aus den oben aufgeführten Komponenten besteht. Eine weitere Ausführungsform der vorliegenden Erfindung betrifft eine erfindungsgemäße reaktive Einkomponenten-Klebstoffzusammensetzung, die neben den oben aufgeführten Komponenten weiterhin eine oder mehrere, wie zwei, drei, vier, fünf, sechs, sieben, acht, neun oder zehn Komponenten aufweist.

Die erfindungsgemäße reaktive Einkomponenten-Klebstoffzusammensetzung enthält mindestens ein alpha-Silan-terminiertes organisches Polymer. Demzufolge kann die erfindungsgemäße reaktive Einkomponenten-Klebstoffzusammensetzung ein alpha-Silan-terminiertes Polymer aufweisen oder mehrere, wie zwei, drei oder vier, Polymere. Hierbei ist für den zuständigen Fachmann klar, dass Polymere keine Reinstoffe darstellen, sondern herstellungsbedingt als Stoffgemisch mit einer charakteristischen Stoffverteilung auftreten und dass daher "ein Polymer" vereinfachend für dieses Stoffgemisch steht.

Alpha-Silan-terminierte organische Polymere sind dem Fachmann bekannt und können beispielsweise kommerziell erhalten werden. So vertreibt die Firma Wacker Chemie AG, München (DE) solche alpha-Silan modifizierten Polymere unter der Bezeichnung Geniosil^{®}, wie Geniosil^{®} STP-E10 oder Geniosil^{®} XB 502.

Alpha-Silane kennzeichnen sich durch den so genannten alpha-Effekt. Bei diesem bewirkt die Nachbarschaft eines elektronegativen Donors, wie Stickstoff oder Sauerstoff, in alpha-Stellung zum Silicium-Atom, also beispielsweise nur durch eine Methylenbrücke davon getrennt, eine Aktivierung von Alkoxygruppen am Silicium-Atom. Diese sind dadurch gegenüber Nukleophilen, wie Wasser, reaktiver. Dies wiederum bewirkt eine beschleunigte Hydrolyse, ohne dass beispielsweise zinnhaltige Katalysatoren erforderlich wären. Die Hydrolyse der Silane kann unter Vernetzung zu Siloxanen erfolgen. Insoweit stellen erfindungsgemäße reaktive Einkomponenten-Klebstoffzusammensetzung alpha-Silan-terminierte Klebstoffe dar, die feuchtigkeitsvernetzend zu Siloxanen reagieren können.

Vorzugsweise handelt es sich bei dem mindestens einen alpha-Silan-terminierten organischen Polymer um ein alpha-Silan-terminiertes organisches Polymer die Formel (I)

Y-[(CR^{1a}₂)-Si(R^{2a})_{b1}(OR^{3a})_{3-b1}]ₓ (I),

wobei
Y einen x-wertigen, über Stickstoff, Sauerstoff oder Schwefel gebundenen Polymerrest bedeutet,
R^{2a} gleich oder verschieden sein kann und einen einwertigen, gegebenenfalls substituierten, SiC-gebundenen Kohlenwasserstoffrest darstellt,
R^{1a} gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R^{3a} gleich oder verschieden sein kann und Wasserstoffatom oder einen einwertigen, gegebenenfalls substituierten Kohlenwasserstoffrest darstellt,
x eine ganze Zahl von 1 bis 10 ist,
b1 gleich oder verschieden sein kann und 0, 1 oder 2 ist.

Solche alpha-Silan-terminierten organischen Polymere sind aus WO 2003/014 226 A1, WO 2010/066 826 A1 oder WO 2013/026 654 A1 bekannt.

Dementsprechend sind Beispiele für Reste R^{2a} Alkylreste, wie der Methyl-, Ethyl-, n-Propyl-, iso-Propyl, 1-n-Butyl-, 2-n-Butyl-, iso-Butyl-, tert.-Butyl, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste , wie der n-Octadecylrest; Cycloalkylreste, wie der Cyclopentyl-, Cyclohexyl-, Cycloheptylrest und Methylcyclohexylrest; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste Xylylreste und Ethylphenylreste; und Aralkylreste, wie der Benzylrest, der alpha- und der beta-Phenylethylrest. Beispiele für substituierte Reste R^{2a} sind Halogenalkylreste wie der 3,3,3-Trifluor-n-propylrest, der 2,2,2,2',2',2'-Hexafluorisopropylrest und der Heptafluorisopropylrest und Halogenarylreste, wie der o-, m- und p-Chlorphenylrest. Bevorzugt handelt es sich bei dem Rest R^{2a} um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest.

Beispiele für Reste R^{1a} sind ein Wasserstoffatom, die für R^{2a} angegebenen Reste sowie über Stickstoff, Phosphor, Sauerstoff, Schwefel, Kohlenstoff oder Carbonylgruppe an das Kohlenstoffatom gebundene, gegebenenfalls substituierte Kohlenwasserstoffreste. Bevorzugt handelt es sich bei Rest R^{1a} um ein Wasserstoffatom und Kohlenwasserstoffreste mit 1 bis 20 Kohlenstoffatomen, insbesondere um ein Wasserstoffatom.

Beispiele für Reste R^{3a} sind ein Wasserstoffatom oder die für Rest R^{2a} angegebenen Beispiele. Bevorzugt handelt es sich bei dem Rest R^{3a} um ein Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl-und Ethylrest.

Als Polymere, welche dem Polymerrest Y zugrunde liegen, sind im Sinne der vorliegenden Erfindung alle Polymere zu verstehen, bei denen mindestens 50%, bevorzugt mindestens 70%, besonders bevorzugt mindestens 90%, aller Bindungen in der Hauptkette Kohlenstoff-Kohlenstoff-, Kohlenstoff-Stickstoff- oder Kohlenstoff-Sauerstoff-Bindungen sind. Bei Polymerrest Y handelt es sich bevorzugt um organische Polymerreste, die als Polymerkette Polyoxyalkylene , wie Polyoxyethylen, Polyoxypropylen, Polyoxybutylen, Polyoxytetramethylen, Polyoxyethylen-Polyoxypropylen-Copolymer und PolyoxypropylenPolyoxybutylenCopolymer; Kohlenwasserstoffpolymere, wie Polyisobutylen, Polyethylen oder Polypropylen und Copolymere von Polyisobutylen mit Isopren; Polyisoprene; Polyurethane; Polyester; Polyamide; Polyacrylate; Polymetacrylate und Polycarbonate enthalten und die vorzugsweise über -O-C(=O)-NH-, -NH-C(=O)-O-, -NH-C(=O)-NH-, -NR'-C(=0)-NH-, NH-C(=O)-NR' -, -NH-C(=O)-, -C(=O)-NH-, -C(=O)-O-, -O-C{=O)-, -O-C(=O)-O-, -S-C(=O)-NH- , -NH-C(=O)-S-, -C(=O)-S-, -S-C{=O)-, -S-C(=O)-S-, -C(-O)-, -S-, -O- und -NR'- an die Gruppe bzw. Gruppen -[(CR^{1a}₂)-Si(R^{2a})_{b1}(OR^{3a})_{3-b1}] gebunden sind, wobei R' gleich oder verschieden sein kann und eine für R^{2a} angegebene Bedeutung hat oder für eine Gruppe -CH(COOR")-CH₂-C(O)OR" steht, in der R" gleich oder verschieden sein kann und eine für R^{2a} angegebene Bedeutung hat . Beispiele für Reste R' sind Cyclohexyl-, Cyclopentyl-, n- und iso-Propyl-, n-, iso- und t-Butyl-, die diversen Sterioisomere des Pentylrests, Hexylrests oder Heptylrests sowie der Phenylrest. Bei Rest R' handelt es sich vorzugsweise um eine Gruppe -CH(COOR")-CH₂-COOR" oder einen gegebenenfalls substituierten Kohlenwasserstoffrest mit 1 bis 20 Kohlenstoffatomen, besonders bevorzugt um eine lineare, verzweigte oder cyclische Alkylgruppe mit 1 bis 20 Kohlenstoffatomen oder um eine gegebenenfalls mit Halogenatomen substituierte Axylgruppe mit 6 bis 20 Kohlenstoffatomen. Bei den Resten R" handelt es sich vorzugsweise um Alkylgruppen mit 1 bis 10 Kohlenstoffatomen, besonders bevorzugt um Methyl-, Ethyl- oder Propylreste.

Besonders bevorzugt handelt es sich bei Rest Y in Formel (I) um Polyurethanreste und Polyoxyalkylenreste, insbesondere um polyoxypropylenhaltige Polyurethanreste oder Polyoxypropylenreste.

In einer besonders bevorzugten Ausführung der Erfindung handelt es sich bei mindestens einen alpha-Silan-terminierten organischen Polymers um silanterminierte Polyether und silan-terminierte Polyurethane, insbesondere um silanterminierte Polypropylenglycole und silanterminierte Polyurethane jeweils mit über -O-C(=O)-NH-C(R^{1a})₂-Gruppen oder -NH-C (=O)-NR'-C(R^{1a})₂-Gruppen angebundene Dimethoxymethylsilyl, Trimethoxysilyl, Diethoxymethylsilyl oder Triethoxysilyl-Endgruppen, wobei R' und R^{1a} eine der oben angegebenen Bedeutungen haben.

Die mittleren Molekulargewichte Mn der alpha-Silan-terminierten organischen Polymere betragen vorzugsweise mindestens 400 g/mol, besonders bevorzugt mindestens 600 g/mol, insbesondere mindestens 800 g/mol und vorzugsweise höchstens 30 000 g/mol, besonders bevorzugt höchstens 19 000 g/mol, insbesondere höchstens 13 000 g/mol. Die Viskosität beträgt vorzugsweise mindestens 0,2 Pas, bevorzugt mindestens 1 Pas, besonders bevorzugt mindestens 5 Pas, und vorzugsweise höchstens 1000 Pas, bevorzugt höchstens 700 Pas, jeweils gemessen bei 20 °C.

Die erfindungsgemäß eingesetzten alpha-Silan-terminierten organischen Polymere sind handelsübliche Produkte oder können nach in der Chemie gängigen Verfahren hergestellt werden. Die Herstellung der alpha-Silan-terminierten organischen Polymere kann durch verschiedene, bekannte Verfahren erfolgen, wie Additionsreaktionen, wie z.B. der Hydrosilylierung, Michael-Addition, Diels-Alder-Addition oder Reaktionen zwischen isocyanatfunktionellen Verbindungen mit Verbindungen, die isocyanatreaktive Gruppen aufweisen.

Ganz besonders bevorzugt handelt es sich bei dem mindestens einen alpha-Silan-terminierten organischen Polymer um ein Polymer, das mindestens eine Endgruppe, vorzugsweise mindestens zwei und insbesondere eine Vielzahl von Endgruppen der Formel

*-X-C(=O)-N(R)-C(R¹R²)-Si(R³)ₐ(OR⁴)₃₋ₐ

aufweist, wobei
X für O oder N(R) steht;
jedes R unabhängig voneinander für Wasserstoff oder einen Kohlenwasserstoffrest mit 1 bis 20 Kohlenstoffatomen steht;
R¹ und R² unabhängig voneinander für Wasserstoff oder einen Kohlenwasserstoffrest mit 1 bis 20 Kohlenstoffatomen stehen;
R³ und R⁴ unabhängig voneinander für einen Kohlenwasserstoffrest mit 1 bis 20 Kohlenstoffatomen stehen;
a für 0, 1 oder 2 steht und
"*" die Bindung für die Anbindung an das Polymer kennzeichnet.

Mehr bevorzugt steht R für Wasserstoff oder einen Alkylrest, der 1 bis 4 Kohlenstoffatome aufweist, wobei der Alkylrest geradkettig oder verzweigt sein kann. Weiter mehr bevorzugt handelt es sich bei R um H, Methyl oder Ethyl, weiter mehr bevorzugt um Wasserstoff oder Methyl.

Insbesondere bevorzugt ist R Wasserstoff.

Mehr bevorzugt sind R¹ und R² gleich. Weiterhin mehr bevorzugt sind R¹ und R² Wasserstoff oder ein Alkylrest, der 1 bis 4 Kohlenstoffatome aufweist, wobei der Alkylrest geradkettig oder verzweigt sein kann. Weiter mehr bevorzugt handelt es sich bei R¹ und R² um H, Methyl oder Ethyl, weiter mehr bevorzugt um Wasserstoff oder Methyl.

Insbesondere bevorzugt sind R¹ und R² Wasserstoff.

Mehr bevorzugt sind R³ und R⁴ gleich. Weiterhin mehr bevorzugt sind R³ und R⁴ ein Alkylrest, der 1 bis 4 Kohlenstoffatome aufweist, wobei der Alkylrest geradkettig oder verzweigt sein kann. Weiter mehr bevorzugt handelt es sich bei R³ und R⁴ um Methyl oder Ethyl.

Insbesondere bevorzugt sind R³ und R⁴ Methyl.

Vorzugsweise ist a =0 oder 1, mehr bevorzugt ist a = 1.

Ein beispielhaftes mindestens ein alpha-Silan-terminiertes organisches Polymer ist ein Polymer, das mindestens eine Endgruppe der Formel *-O-C(=O)-NH-CH₂-Si(CH₃)(OCH₃)₂ aufweist.

Vorzugsweise handelt es sich bei dem organischen Polymer um ein Polyoxyalkylen, ein Kohlenwasserstoffpolymer, ein Polyurethan, ein Polyester, ein Polyamid, ein Polysiloxan, ein Polyacrylat, ein Polymethacrylat oder ein Polycarbonat. Bevorzugt ist Polyoxyalkylen. Vorzugsweise enthält das organische Polymer über die oben aufgeführten Endgruppen keine weiteren Silangruppen.

Bevorzugte Polyoxyalkylene sind Polypropylene, beispielsweise mit einem zahlengemittelten Molekulargewicht im Bereich von 5000 g/mol bis 50.000 g/mol, mehr bevorzugt von 7500 g/mol bis 30.000 g/mol, mehr bevorzugt von 10.000 g/mol bis 15.000 g/mol.

Die erfindungsgemäße reaktive Einkomponenten-Klebstoffzusammensetzung kann weiterhin mindestens ein Siliconharz enthalten. Somit können ein oder mehrere, wie zwei, drei oder vier unterschiedliche Siliconharze vorhanden sein. Bevorzugt ist nur ein Siliconharz. Diese Siliconharze sind verschieden von den alpha-Silan-terminierten organischen Polymeren, die der Komponente a) zuzurechnen sind.

Bevorzugt ist ein Phenylsiliconharz. Siliconharze sind beispielsweise in DE 10 2013 213 835 A1 beschrieben. Ein Siliconharz gilt im Rahmen der vorliegenden Erfindung als zusätzliche Komponente, sofern es sich nicht bereits um eine der oben bezeichneten Komponenten handelt.

Dementsprechend enthalten mögliche Siliconharze gemäß DE 10 2013 213 835 A1 Einheiten der Formel

R^{3'}_{c'}(R^{4'}O)_{d'}R^{5'}_{e'}SiO_{(4-c'-d'-e')/2} (II),

wobei
R^{3'} gleich oder verschieden sein kann und Wasserstoffatom, einen einwertigen, SiC-gebundenen, gegebenenfalls substituierten aliphatischen Kohlenwasserstoffrest oder einen zweiwertigen, gegebenenfalls substituierten, aliphatischen Kohlenwasserstoffrest, der zwei Einheiten der Formel (II) verbrückt, bedeutet,
R^{4'} gleich oder verschieden sein kann und Wasserstoffatom oder einen einwertigen, gegebenenfalls substituierten Kohlenwasserstoffrest bedeutet,
R^{5'} gleich oder verschieden sein kann und einen einwertigen, SiC-gebundenen, gegebenenfalls substituierten aromatischen Kohlenwasserstoffrest bedeutet,
c' 0, 1, 2 oder 3 ist,
d' 0, 1, 2 oder 3, bevorzugt 0, 1 oder 2, besonders bevorzugt 0 oder 1 , ist und
e' 0, 1 oder 2, bevorzugt 0 oder 1, ist,
mit der Maßgabe, dass die Summe aus c' + d' + e' kleiner oder gleich 3 ist, in mindestens einer Einheit e' verschieden 0 ist und in mindestens 40 % der Einheiten der Formel (II) die Summe c' + e' gleich 0 oder 1 ist.

Geeignete Siliconharze bestehen vorzugsweise zu mindestens 90 Gew.-% aus Einheiten der Formel (II), besonders bevorzugt ausschließlich aus Einheiten der Formel (II).

Beispiele für Reste R^{3'} sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest, iso-Octylreste und der 2,2,4-Trimethylpentylrest; Nonylreste, wie der n-Nonylrest; Decylreste, wie der n-Decylrest; Dodecylreste, wie der n-Dodecylrest; Octadecylreste, wie der n-Octadecylrest; Cycloalkylreste, wie der Cyclopentyl-, Cyclohexyl-, Cycloheptylrest und Methylcyclohexylreste; Alkenylreste, wie der Vinyl-, 1-Propenyl- und der 2-Propenylrest; Arylreste, wie der Phenyl-, Naphthyl-, Anthryl- und Phenanthrylrest; Alkarylreste, wie o-, m-, p-Tolylreste; Xylylreste und Ethylphenylreste; und Aralkylreste, wie der Benzylrest, der o und der β-Phenylethylrest.

Beispiele für substituierte Reste R^{3'} sind Halogenalkylreste, wie der 3,3,3-Trifluor-n-propylrest, der 2, 2,2,2',2',2'-Hexafluorisopropylrest und der Heptafluorisopropylrest, und Halogenarylreste, wie der o-, m- und p-Chlorphenylrest.

Bevorzugt handelt es sich bei Rest R^{3'} um gegebenenfalls mit Halogenatomen substituierte, einwertige Kohlenwasserstoffreste mit 1 bis 6 Kohlenstoffatomen, besonders bevorzugt um Alkylreste mit 1 oder 2 Kohlenstoffatomen, insbesondere um den Methylrest. Es kann sich bei dem Rest R^{3'} aber auch um zweiwertige aliphatische Reste handeln, die zwei Silylgruppen der Formel (II) miteinander verbinden, wie z.B. Alkylenreste mit 1 bis 10 Kohlenstoffatomen, wie etwa Methylen-, Ethylen-, Propylen- oder Butylenreste.

Bevorzugt handelt es sich bei Rest R^{3'} jedoch um gegebenenfalls mit Halogenatomen substituierte, einwertige SiC-gebundene aliphatische Kohlenwasserstoffreste mit 1 bis 18 Kohlenstoffatomen, besonders bevorzugt um aliphatische Kohlenwasserstoffreste mit 1 bis 6 Kohlenstoffatomen, insbesondere um den Methylrest.

Beispiele für Rest R^{4'} sind Wasserstoffatom oder die für Rest R^{3'} angegebenen Beispiele.

Bevorzugt handelt es sich bei Rest R^{4'} um ein Wasserstoffatom oder gegebenenfalls mit Halogenatomen substituierte Alkylreste mit 1 bis 10 Kohlenstoffatomen, besonders bevorzugt um Alkylreste mit 1 bis 4 Kohlenstoffatomen, insbesondere um den Methyl- und Ethylrest.

Beispiele für Reste R^{5'} sind die oben für R^{3'} angegebenen aromatischen Reste.

Bevorzugt handelt es sich bei Rest R^{5'} um gegebenenfalls mit Halogenatomen substituierte, SiC-gebundene aromatische Kohlenwasserstoffreste mit 1 bis 18 Kohlenstoffatomen, wie z.B. Ethylphenyl-, Toluyl-, Xylyl-, Chlorphenyl-, Naphtyl- oder Styrylreste, besonders bevorzugt um den Phenylrest.

Bevorzugt werden Siliconharze eingesetzt, in denen mindestens 90% aller Reste R^{3'} für Methylrest, mindestens 90% aller Reste R^{4'} für Methyl-, Ethyl-, Propyl- oder Isopropylrest und mindestens 90% aller Reste R^{5'} für Phenylrest stehen.

Vorzugsweise werden Siliconharze, die mindestens 40%, besonders bevorzugt mindestens 60%, Einheiten der Formel (II) aufweisen, in denen c' gleich 0 ist, jeweils bezogen auf die Gesamtzahl an Einheiten der Formel (II).

Vorzugsweise werden Siliconharze eingesetzt, die, jeweils bezogen auf die Gesamtzahl an Einheiten der Formel (II), mindestens 70%, besonders bevorzugt mindestens 80%, Einheiten der Formel (II) aufweisen, in denen d' für den Wert 0 oder 1 steht.

Vorzugsweise werden Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 steht. Es können Siliconharze eingesetzt werden, die ausschließlich Einheiten der Formel (II) aufweisen, in denen e' gleich 1 ist, aber besonders bevorzugt weisen mindestens 10%, besonders bevorzugt mindestens 20%, höchstens 60%, besonders bevorzugt höchstens 80%, der Einheiten der Formel (II) ein e' von 0 auf.

Vorzugsweise werden Siliconharze eingesetzt, die, jeweils bezogen auf die Gesamtzahl an Einheiten der Formel (II), mindestens 50%, besonders bevorzugt mindestens 70%, insbesondere mindestens 80%, Einheiten der Formel (II) aufweisen, in denen die Summe c' + e' gleich 1 ist.

In einer besonders bevorzugten Ausführung der Erfindung werden Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 und c' für den Wert 0 steht. Vorzugsweise weisen dabei höchstens 40%, besonders bevorzugt höchstens 70% aller Einheiten der Formel (II) ein d' ungleich 0 auf.

In einer weiteren besonders bevorzugten Ausführung der Erfindung werden als Siliconharze eingesetzt, die, jeweils bezogen auf die Gesamtzahl an Einheiten der Formel (II), mindestens 20%, besonders bevorzugt mindestens 40%, Einheiten der Formel (II) aufweisen, in denen e' für den Wert 1 und c' für den Wert 0 steht und die zudem mindestens 1 %, bevorzugt mindestens 10%, an Einheiten der Formel (II) aufweisen, in denen c' für 1 oder 2, bevorzugt für 1, und e' für 0 steht.

Beispiele für die Siliconharze sind Organopolysiloxanharze, die im Wesentlichen, vorzugsweise ausschließlich, aus (Q)-Einheiten der Formeln SiO_{4/2}, Si(OR^{4'})O_{3/2}, Si(OR^{4'})₂O_{2/2} und Si(OR^{4'})₃O_{1/2}, (T)-Einheiten der Formeln PhSiO_{3/2}, PhSi(OR^{4'})O_{2/2}, PhSi(OR^{4'})₂O_{1/2}, MeSiO_{3/2}, MeSi(OR^{4'})O_{2/2} und MeSi(OR^{4'})₂O_{1/2} (D)-Einheiten der Formeln Me₂SiO_{2/2}, Me₂Si(OR^{4'})O_{1/2}, Ph₂SiO_{2/2} und Ph₂Si(OR^{4'})O_{1/2}, MePhSiO_{2/2} und MePhSi(OR^{4'})O_{1/2} sowie (M)-Einheiten der Formel Me₃SiO_{1/2} bestehen, wobei Me für einen Methylrest, Ph für einen Phenylrest und R^{4'} für Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, wobei das Harz pro Mol (T)-Einheiten 0-2 Mol (Q)-Einheiten, 0-2 Mol (D)-Einheiten und 0-2 Mol (M)-Einheiten enthält.

Bevorzugte Beispiele für Siliconharze sind Organopolysiloxanharze, die im Wesentlichen, vorzugsweise ausschließlich, aus T-Einheiten der Formeln PhSiO_{3/2}, PhSi(OR^{4'})O_{2/2} und PhSi(OR^{4'})₂O_{1/2}, T-Einheiten der Formeln MeSiO_{3/2}, MeSi(OR^{4'})O_{2/2} und MeSi(OR^{4'})₂O_{1/2} sowie D-Einheiten der Formeln Me₂SiO_{2/2} und Me₂Si(OR^{4'})O_{1/2} bestehen, wobei Me für einen Methylrest, Ph für einen Phenylrest und R^{4'} für ein Wasserstoffatom oder gegebenenfalls mit Halogenatomen substituierte Alkylreste mit 1 bis 10 Kohlenstoffatomen, besonders bevorzugt um Wasserstoffatom oder Alkylreste mit 1 bis 4 Kohlenstoffatomen, steht, mit einem molaren Verhältnis von (T)- zu (D)-Einheiten von 0,5 bis 2,0.

Unter diesen Beispielen werden Siliconharze besonders bevorzugt, deren Einheiten der Formel (II) zu mindestens 50%, bevorzugt mindestens 70%, insbesondere mindestens 85% aus T- Einheiten der Formeln PhSiO_{3/2}, PhSi(OR^{4'})O_{2/2}, PhSi(OR^{4'})₂O_{1/2}, Me SiO_{3/2}, MeSi(OR^{4'})O_{2/2} und MeSi(OR^{4'})₂O_{1/2} gebildet werden, wobei diese Siliconharze mindestens 30%, bevorzugt mindestens 40%, insbesondere mindestens 50% T-Einheiten der Formeln PhSiO_{3/2}, PhSi(OR^{4'})O_{2/2} und PhSi(OR^{4'})₂O_{1/2} und mindestens 10%, bevorzugt mindestens 15%, insbesondere mindestens 20% T-Einheiten der MeSiO_{3/2}, MeSi(OR^{4'})O_{2/2} und MeSi(OR^{4'})₂O_{1/2} enthalten.

Vorzugsweise besitzen die Siliconharze eine mittlere Molmasse (Zahlenmittel) Mn von mindestens 500 g/mol und besonders bevorzugt von mindestens 600 g/mol. Die mittlere Molmasse Mn liegt vorzugsweise bei höchstens 400000 g/mol, besonders bevorzugt bei höchstens 100000 g/mol, insbesondere bei höchstens 50000 g/mol.

Solche Siliconharze können bei 23°C und 1000 hPa sowohl fest als auch flüssig sein, wobei Siliconharze bevorzugt flüssig sind.

Bei den Siliconharzen handelt es sich um handelsübliche Produkte (beispielsweise Silres^{®} IC 368 der Firma Wacker Chemie (DE)) oder diese können nach in der Siliciumchemie gängigen Methoden hergestellt werden.

Weiterhin enthält die erfindungsgemäße reaktive Einkomponenten-Klebstoffzusammensetzung mindestens einen Thermobeschleuniger. Demzufolge kann ein Thermobeschleuniger enthalten sein. Es können auch mehrere, wie zwei, drei oder vier, Thermobeschleuniger enthalten sein.

Thermobeschleuniger sind im Stand der Technik, beispielsweise in DE 60 116 825 T2, beschrieben.

Erfindungsgemäß handelt es sich bei dem mindestens einen Thermobeschleuniger um ein ein Salz eines bicyclischen tertiären Amins der folgenden Formel (II) ist: 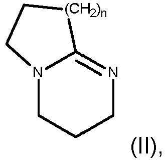 worin n eine ganze Zahl von 1 bis 3 ist. Besonders bevorzugt ist der mindestens eine Thermobeschleuniger DBU (1,8-Diazabicyclo[5.4.0]undec-7-en) oder ein Salz davon.

Erfindungsgemäß wird ein Salz des bicyclisches tertiären Amins eingesetzt, insbesondere ein Salz des bicyclisches tertiären Amins mit einer aliphatischen Monocarbonsäure, wobei die Monocarbonsäure vorzugsweise aus der Gruppe ausgewählt ist, die aus Methacrylsäure, Crotonsäure und Tiglinsäure besteht, wobei das Mischungsverhältnis vorzugsweise so eingestellt ist, dass das Molverhältnis des bicyclischen tertiären Amins zur aliphatischen Monocarbonsäure höchstens 1,3 beträgt.

Insbesondere ist das Crotonsäuresalz von DBU bevorzugt.

Weiterhin enthält die erfindungsgemäße reaktive Einkomponenten-Klebstoffzusammensetzung mindestens ein niedermolekulares Silan, das eine primäre oder sekundäre, vorzugsweise eine primäre, Aminogruppe oder eine geblockte Aminogruppe, die zu der primären oder sekundären Aminogruppe hydrolysiert, aufweist, enthält. Somit kann die Komponente d) ein oder mehrere, wie zwei, drei oder vier, solcher Silane aufweisen. Vorzugsweise besteht die Komponente d) nur aus einer Komponente. Die Komponente d) ist unterschiedlich zu den Komponenten a) bis c) und zählt nur insofern zu Komponente d), soweit diese nicht als eine der Komponenten a) bis c) aufgefasst werden kann.

Das mindestens eine niedermolekulare Silan der Komponente d) weist eine primäre Aminogruppe -NH₂ auf. Hierbei kann die Aminogruppe Teil einer funktionellen Gruppe, wie beispielsweise einer Amidgruppe -C(=O)NH₂ oder ein primäres Amin im engeren Sinne sein. Vorteilhafterweise handelt es sich um ein Amin. Auch niedermolekulare Silane, die eine sekundäre Aminogruppe aufweisen, können eingesetzt werden. Es können außerdem blockierte Aminosilane eingesetzt werden. Hierbei hydrolysiert die geblockte Aminogruppe zu der primären oder sekundären Aminogruppe, vorzugsweise zu der primären Aminogruppe. Als Beispiel sei ((Triethoxysilyl)propyl)methylisobutylimin zu nennen, das unter der Handelsbezeichnung VPS 1262 von der Firma Evonik (DE) vertrieben wird. Auch hier kann die Aminogruppe Teil einer funktionellen Gruppe sein oder es handelt sich um eine Aminogruppe, was bevorzugt ist. Selbstverständlich können mehrere primäre Aminogruppen vorhanden sein, insbesondere mehrere primäre Aminogruppen, mehrere sekundäre Aminogruppen und zumindest eine primäre und zumindest eine sekundäre Aminogruppe vorhanden sein. Anstelle der primären oder sekundären Aminogruppe kann selbstverständlich deren blockierte Form stehen. Bevorzugt ist jedoch eine primäre oder sekundäre, mehr bevorzugt eine primäre Aminogruppe.

Die niedermolekularen Silane weisen ein Molekulargewicht im Bereich von 100 g/mol bis 500 g/mol auf.

Bevorzugte niedermolkulare Silane sind in DE 10 2012 200790 A1 beschrieben. Demzufolge sind bevorzugte niedermolekulare Silane solche enthaltend Einheiten der Formel

DSi(OR^{7'})_{g'}R^{8'}_{(3-g')} (IX),

worin
R^{7'} gleich oder verschieden sein kann und Wasserstoffatom oder gegebenenfalls substituierte Kohlenwasserstoffreste bedeutet,
D gleich oder verschieden sein kann und einen einwertigen, SiC-gebundenen Rest mit basischem Stickstoff einer primären, oder sekundären oder geblockten Aminogruppe bedeutet, R^{8'} gleich oder verschieden sein kann und einen einwertigen, gegebenenfalls substituierten SiC-gebundenen, von basischem Stickstoff freien organischen Rest bedeutet,
g' 1, 2 oder 3, bevorzugt 2 oder 3, ist.

Beispiele für gegebenenfalls substituierte Kohlenwasserstoffreste R^{7'} sind die für Rest R^{3'} unten angegebenen Beispiele.

Bei den Resten R^{7'} handelt es sich vorzugsweise um Wasserstoffatom und gegebenenfalls mit Halogenatomen substituierte Kohlenwasserstoffreste mit 1 bis 18 Kohlenstoffatomen, besonders bevorzugt um Wasserstoffatom und Kohlenwasserstoffreste mit 1 bis 10 Kohlenstoffatomen, insbesondere um Methyl- und Ethylrest.

Beispiele für Rest R^{8'} sind die für R^{3'} unten angegebenen Beispiele.

Bei Rest R^{8'} handelt es sich vorzugsweise um gegebenenfalls mit Halogenatomen substituierte Kohlenwasserstoffreste mit 1 bis 18 Kohlenstoffatomen, besonders bevorzugt um Kohlenwasserstoffreste mit 1 bis 5 Kohlenstoffatomen, insbesondere um den Methylrest. Beispiele für Reste D sind Reste der Formeln H₂N(CH₂)₃-, H₂N(CH₂)₂NH(CH₂)₃-, H₂N(CH₂)₂NH(CH₂)₂NH(CH₂)₃-, H₃CNH(CH₂)₃-, C₂H₅NH(CH₂)₃-, C₃H₇NH(CH₂)₃-, C₄H₉NH(CH₂)₃-, C₅H₁₁NH(CH₂)₃-, C₆H₁₃NH(CH₂)₃-, C₇H₁₅NH(CH₂)₃-, H₂N(CH₂)₄-, H₂N-CH₂-CH(CH₃)-CH₂-, H₂N(CH₂)₅-, cyclo-C₅H₉NH(CH₂)₃-, cyclo-C₆H₁₁NH(CH₂)₃-, Phenyl-NH(CH₂)₃-, (CH₃)₂N(CH₂)₃-, (C₂H₅)₂N(CH₂)₃-, (C₃H₇)₂NH(CH₂)₃-, (C₄H₉)₂NH(CH₂)₃-, (C₅R₁₁)₂NH(CH₂)₃-, (C₆H₁₃)₂NH(CH₂)₃-, (C₇H₁₅)₂NH(CH₂)₃-, H₂N(CH₂)-, H₂N(CH₂)₂NH(CH₂)-, H₂N(CH₂)₂NH(CH₂)₂NH(CH₂)-, H₃CNH(CH₂)-, C₂H₅NH(CH₂)-, C₃H₇NH(CH₂)-, C₄H₉NH(CH₂)-, C₅H₁₁NH(CH₂)-, C₆H₁₃NH(CH₂)-, C₇H₁₅NH(CH₂)-, cyclo-C₅H₉NH(CH₂)-, cyclo-C₆H₁₁NH(CH₂)-, Phenyl-NH(CH₂)-, (CH₃)₂N(CH₂)-, (C₂H₅)₂N(CH₂)-, (C₃H₇)₂NH(CH₂)-, (C₄H₉)₂NH(CH₂)-, (C₅H₁₁)₂NH(CH₂)-, (C₆H₁₃)₂NH(CH₂)-, (C₇H₁₅)₂NH(CH₂)-, (CH₃O)₃Si(CH₂)₃NH(CH₂)₃-, (C₂H₅O)₃Si(CH₂)₃NH(CH₂)₃-, (CH₃O)₂(CH₃)Si(CH₂)₃NH(CH₂)₃- und (C₂H₅O)₂(CH₃)Si(CH₂)₃NH(CH₂)₃- sowie Umsetzungsprodukte der obengenannten primären Aminogruppen mit Verbindungen, die gegenüber primären Aminogruppen reaktive Doppelbindungen oder Epoxidgruppen enthalten (geblockte Aminogruppen).

Beispiele für die Silane der Formel (IX) sind H₂N(CH₂)₃-Si(OCH₃)₃, H₂N(CH₂)₃-Si(OC₂H₅)₃, H₂N(CH₂)₃-Si(OCH₃)₂CH₃, H₂N(CH₂)₃-Si(OC₂H₅)₂CH₃, H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, H₂N(CH₂)₂NH(CH₂)₃-Si(OC₂H₅)₂CH₃, H₂N(CH₂)₂NH(CH₂)₃-Si(OH)₃, H₂N(CH₂)₂NH(CH₂)₃-Si(OH)₂CH₃, H₂N(CH₂)₂NH(CH₂)₂NH(CH₂)₃Si-(OCH₃)₃, H₂N(CH₂)₂NH(CH₂)₂NH(CH₂)₃-Si(OC₂H₅)₃, cyclo-C₆H₁₁NH(CH₂)₃Si-(OCH₃)₃, cyclo-C₆H₁₁NH(CH₂)₃-Si(OC₂H₅)₃, cyclo-C₆H₁₁NH(CH₂)₃-Si(OCH₃)₂CH₃, cyclo-C₆H₁₁NH(CH₂)₃-Si(OC₂H₅)₂CH₃, cyclo-C₆H₁₁NH(CH₂)₃-Si(OH)₃, cyclo-C₆H₁₁NH(CH₂)₃-Si(OH)₂CH₃, Phenyl-NH(CH₂)₃-Si(OCH₃)₃, Phenyl-NH(CH₂)₃-Si(OC₂H₅)₃, Phenyl-NH(CH₂)₃-Si(OCH₃)₂CH₃, Phenyl-NH(CH₂)₃-Si(OC₂H₅)₂CH₃, Phenyl-NH(CH₂)₃-Si(OH)₃, Phenyl-NH(CH₂)₃-Si(OH)₂CH₃, HN((CH₂)₃-Si(OCH₃)₃)₂, HN((CH₂)₃-Si(OC₂H₅)₃)₂HN((CH₂)₃-Si(OCH₃)₂CH₃)₂, HN((CH₂)₃-Si(OC₂H₅)₂CH₃)₂, cyclo-C₆H₁₁NH(CH₂)-Si(OCH₃)₃, cyclo-C₆H₁₁NH(CH₂)-Si(OC₂H₅)₃, cyclo-C₆H₁₁NH(CH₂)-Si(OCH₃)2CH₃, cyclo-C₆H₁₁NH(CH₂)-Si(OC₂H₅)₂CH₃, cyclo-C₆H₁₁NH(CH₂)-Si(OH)₃, cyclo-C₆H₁₁NH(CH₂)-Si(OH)₂CH₃, Phenyl-NH(CH₂)-Si(OCH₃)₃, Phenyl-NH(CH₂)-Si(OC₂H₅)₃, Phenyl-NH(CH₂)-Si(OCH₃)₂CH₃, Phenyl-NH(CH₂)-Si(OC₂H₅)₂CH₃, Phenyl-NH(CH₂)-Si(OH)₃ und Phenyl-NH(CH₂)-Si(OH)₂CH₃ sowie deren Teilhydrolysate, wobei H₂N(CH₂)₂NH(CH₂)₃-Si(OCH₃)₃, H₂N(CH₂)₂NH(CH₂)₃-Si(OC₂H₅)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OC₂H₅)₃ und cyclo-C₆H₁₁NH(CH₂)₃-Si(OCH₃)₂CH₃ sowie jeweils deren Teilhydrolysate bevorzugt und H₂N(CH₂)₂NH(CH₂)₃-Si(OCH₃)₃, H₂N(CH₂)₂NH(CH₂)₃-Si(OCH₃)₂CH₃, cyclo-C₆H₁₁NH(CH₂)₃-Si(OCH₃)₃, cyclo-C₆H₁₁NH(CH₂)₃-Si(OCH₃)₂CH₃ sowie jeweils deren Teilhydrolysate besonders bevorzugt sind.

Besonders bevorzugte Beispiele sind auch N-(2-Aminoethyl)-3-aminopropyltrimethoxysilan, 3-Amino-propyltrimethoxysilan, 3-(2-Aminoethylamino)propyltriethoxysilan, N-(2-Aminoethyl)-3-amino-propyldimethoxysilan, oder 3-Ureidopropyltrimethoxysilan. Bevorzugt ist insbesondere 3-Aminopropyltrimethoxysilan.

Weiterhin kann die erfindungsgemäße reaktive Einkomponenten-Klebstoffzusammensetzung zusätzlich mindestens einen Füllstoff enthalten. Beispielhafte Füllstoffe sind Calciumcarbonat, beispielsweise Kreide oder Korund, wie beispielsweise Edelkorund.

Durch die erfindungsgemäße reaktive Einkomponenten-Klebstoffzusammensetzung lassen sich hohe Füllgrade realisieren, was bei verschiedenen Anwendungen vorteilhaft sein kann. Zu nennen seien hier beispielsweise Anwendungen, die eine gute thermische Leitfähigkeit oder besondere Anforderungen hinsichtlich des Brandverhaltenes erfordern.

Mit Hilfe der erfindungsgemäßen reaktiven Einkomponenten-Klebstoffzusammensetzung lassen sich beispielsweise Sandwichelemente herstellen. Es hat sich gezeigt, dass Formulierungen, bei denen ein Thermobeschleuniger in der erfindungsgemäßen reaktiven Einkomponenten-Klebstoffzusammensetzung verwendet wird, sich bei Raumtemperatur über mehre Minuten verarbeiten lassen und sich in der Wärme ab ca. 60 °C kurze Presszeiten ergeben können. Die Verwendung von Aminen als Katalysator ist beispielsweise in WO 2019/004922 A1 für Zweikomponentenbeschichtungen beschrieben. Das als Handelsprodukt bekannte Toyocat^{®} DB 40 stellt ein blockiertes Amin dar und wird beispielsweise in DE 10 2016 200 704 A1 erwähnt.

Die erfindungsgemäße reaktive Einkomponenten-Klebstoffzusammensetzung kann auch einen Wasserfänger, wie zum Beispiel Vinyltrimethoxysilan, enthalten.

Um den PCS-Wert (Verbrennungswärme) zu senken, kann die erfindungsgemäße reaktive Einkomponenten-Klebstoffzusammensetzung die oben erwähnten Füllstoffe, wie z. B. Kreide, enthalten. Ein niedriger Brennwert kann durch den Einsatz des mindestens einen Siliconharzes begünstigt werden.

Bei der Aushärtung der erfindungsgemäßen reaktiven Einkomponenten-Klebstoffzusammensetzung wird durch eine Kondensationsreaktion Methanol unter Ausbildung von Siloxangruppen abgespalten.

Bei dem erfindungsgemäßen Verfahren kann die erfindungsgemäße reaktive Einkomponenten-Klebstoffzusammensetzung auf das Substrat mittels der üblichen Methoden aufgetragen werden, z.B. durch Zahnspachtel-, Raupen-, Sprüh- oder Schlitzdüsenauftrag, gegebenenfalls mit Wasser besprüht und anschließend beispielsweise bei Temperaturen von mindestens 60 °C gepresst werden. Die erfindungsgemäße reaktive Einkomponenten-Klebstoffzusammensetzung eignet sich insbesondere für die Herstellung von Dachhimmeln im Automobilbereich oder für die Herstellung von Paneelen. Die erfindungsgemäße reaktive Einkomponenten-Klebstoffzusammensetzung eignet sich insbesondere für Sandwichelemente, bei denen insbesondere Aluminiumplatten eingesetzt werden. Es eignen sich im Rahmen der vorliegenden Erfindung auch Mineralwollpaneelen, insbesondere mit Decklagen aus Edelstahl.

Dementsprechend betrifft die vorliegende Erfindung auch ein erfindungsgemäßes Verfahren zur Verklebung zweier Substrate, wobei ein verklebtes Substratsystem erhalten wird, sowie ein erfindungsgemäßes Substratsystem, wobei es sich bei dem Substratsystem um Dachhimmel im Automobilbereich oder um Paneele handelt. Weiterhin kann es sich um vorzugsweise um Sandwichelemente handeln, bei denen insbesondere Aluminiumplatten eingesetzt sind. Bevorzugte Paneele sind Mineralwollpaneelen, insbesondere mit Decklagen aus Edelstahl.

Des Weiteren ist die vorliegende Erfindung zwar für schwer zu klebende Aluminium- oder Edelstahlplatten besonders gut geeignet, aber auch beispielsweise bei einfach zu klebenden lackierten oder unlackierten Stahlblechdecklagen sehr gut geeignet.

Dementsprechend betrifft die vorliegende Erfindung auch ein erfindungsgemäßes Verfahren zur Verklebung zweier Substrate, wobei ein verklebtes Substratsystem erhalten wird, sowie ein erfindungsgemäßes Substratsystem, wobei zumindest das erste oder das zweite Substrat eine Aluminium- oder Edelstahlplatte bzw. eine lackierten oder unlackierten Stahlblechdecklage ist.

Überraschenderweise werden nach wenigen Minuten Festigkeiten erreicht, welche weitgehend dem Niveau von industriell eingesetzten 1K- bzw. 2K-Polyurethanklebstoffen entsprechen.

### Beispiele

Beispiel 1 für eine erfindungsgemäße Klebstoffformulierung:

180 g Geniosil STP-E10, 120 g Silres 368 und 15 g Dynasylan VTMO wurden in einem Planetenmischer mit Butterfly-Rührwerk vorgelegt. Anschließend wurden portionsweise 700 g CALCIT MX 30 zugegeben und solange gerührt, bis die Füllstoffe gut dispergiert vorlagen. Die Mischung wurde bei Raumtemperatur unter Vakuum (50 mbar) über 30 Minuten gerührt. Anschließend wurden weitere 15 g Vinyltrimethoxysilan, 4 g Beschleuniger aus DE60116825T2, Beispiel 3 (Mischung aus DBU und Crotonsäure) und 20 g Geniosil GF95 zugegeben und die Mischung weitere 5 Minuten unter Vakuum (50 mbar) gerührt (siehe Tabelle 1).

**Tabelle 1: Verwendete Rohstoffe und deren Mengenbilanz.**

| **Rohstoff** | **Hersteller** | **Menge** g | **Anteil** Gew.-% |
|---|---|---|---|
| SILRES 368, Siliconharz b) | Wacker | 120 | 11,4 |
| GENIOSIL STP-E10, α-Silan term. Polymer a) | Wacker | 180 | 17,1 |
| CALCIT MX 30, Füllstoff e) | SH MINERALS GMBH | 700 | 66,4 |
| GENIOSIL GF 95, Aminosilan d) | Wacker | 20 | 1,9 |
| Beschleuniger (DE60116825T2, Beispiel 3), c) | - | 4 | 0,4 |
| Dynasylan VTMO, Wasserfänger | Evonik | 30 | 2,8 |

Die physikalisch-chemischen Eigenschaften der so erhaltenen Formulierung sind in Tabelle 2 aufgeführt.

**Tabelle 2: Physikalisch-Chemische Eigenschaften bei 23 °C.**

| **Parameter** | **Wert** | **Einheit** |
|---|---|---|
| Viskosität bei 6,8 s⁻¹ | 44000 | mPa*s |
| Dichte | 1,7 | g/m² |
| Hautbildezeit*) | ca. 8 | Minuten |

| | | |
|---|---|---|
| *) Die Hautbildezeit wird durch das Andrücken und anschließend wieder Abheben eines Holzspatels in die Klebstoffraupe bei 23 °C und 50 % relativer Luftfeuchte festgestellt. Dieser Vorgang wird alle 60 Sekunden wiederholt, bis der Klebstoff den Holzspatel nicht mehr benetzt. | | |

Anwendungsbeispiel 1 für ein erfindungsgemäßes Verfahren (Herstellung eines Dachhimmels für Kraftfahrzeuge):
Auf einen Hartschaumstoff werden ca. 100 g/m² des Klebstoffes aus obigem erfindungsgemäßen Beispiel 1 aufgetragen und mit ca. 35 g/m² Wasser besprüht. Der daraus hergestellte Verbund bestehend aus einer zusätzlichen Glasfasermatte und einem Stoff wird bei 120 °C über 40 s gepresst. Nach Ende der Presszeit liegt die Festigkeit des Klebstoffes bei einem händischen Schälversuch knapp über der Eigenfestigkeit des Schaumstoffes, wobei der Klebstoff durch den gesamten Verbund penetriert.

Anwendungsbeispiel 2 für ein erfindungsgemäßes Verfahren (Herstellung von Mineralwollpaneelen):
Auf ein (beschichtetes) Metallblech werden mit einer Zahnspachtel ca. 400 g/m² Klebstoff aus obigem Beispiel aufgetragen, mit ca. 100 g Wasser besprüht und Mineralwolle mit einer Dichte von ca. 110 kg/m³ so eingelegt, dass die Fasern der Mineralwolle senkrecht zum Blech stehen. Der Verbund wird über 3,5 bzw. 4,5 Minuten bei 60 °C gepresst. Der Verbund wurde unmittelbar nach der Presszeit händisch aufgerissen, wobei ein großer Anteil an Faserausriss vorhanden war.

Diese Erfindung stellt im Vergleich zu den nach aktuellem Stand der Technik eingesetzten reaktiven Polyurethanklebstoffen eine isocyanatfreie Alternative dar. Der Festigkeitsaufbau ist vergleichbar zu Polyurethanklebstoffen. Die erfindungsgemäße reaktive Einkomponenten-Klebstoffzusammensetzung eignet sich insbesondere für Sandwichelemente, bei denen Aluminiumplatten eingesetzt werden. Es eignen sich im Rahmen der vorliegenden Erfindung auch Mineralwollpaneelen, insbesondere mit Decklagen aus Edelstahl.

Für die Herstellung von Mineralwollpaneelen werden derzeit 2K-Polyurethanklebstoffe eingesetzt, die mit Nieder- bzw. Hochdruckmaschinen gemischt werden und über Sprüh- bzw. Gießverfahren aufgetragen werden. Diese Verfahren sind recht anspruchsvoll, fehleranfällig und erfordern die Investition in teure Maschinentechnik.

Für die erfindungsgemäße reaktive Einkomponenten-Klebstoffzusammensetzung gemäß Beispiel 1 wurde eine Verbrennungswärme nach EN ISO 1716 von 7,8 MJ/kg ermittelt. Dieser vergleichsweise niedrige Wert ist auf den hohen Füllstoffanteil einerseits und den Siliconharzanteil andererseits zurückzuführen. Damit lassen sich Mineralwollpaneele welche gemäß DIN EN 13501:2019-05 der Klasse A2 entsprechen mit Auftragsmengen von bis zu ca. 500 g/m² herstellen. Die erfindungsgemäße reaktive Einkomponenten-Klebstoffzusammensetzung nach Beispiel 1 zeigt auch eine gute Wärmestandfestigkeit.

## Patentansprüche

1. Reaktive Einkomponenten-Klebstoffzusammensetzung, welche bei Raumtemperatur flüssig ist, bezogen auf das Gesamtgewicht der Zusammensetzung enthaltend
a) 3 Gew.-% bis 90 Gew.-% mindestens eines alpha-Silan-terminierten organischen Polymers;
b) 0 Gew.-% bis 80 Gew.-% mindestens eines Siliconharzes;
c) 0,1 Gew.-% bis 5 Gew.-% mindestens eines Thermobeschleunigers, wobei der mindestens eine Thermobeschleuniger ein Salz eines bicyclischen tertiären Amins der folgenden Formel (II) ist: 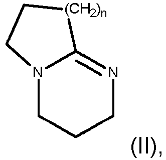 worin n eine ganze Zahl von 1 bis 3 ist;
d) 0,001 Gew.-% bis 5 Gew.-% mindestens eines niedermolekularen Silans, das eine primäre oder sekundäre Aminogruppe oder eine geblockte Aminogruppe, die zu der primären oder sekundären Aminogruppe hydrolysiert, aufweist, wobei das niedermolekulare Silan ein Molekulargewicht im Bereich von 100 bis 500 g/mol aufweist;
e) 0 Gew.-% bis 85 Gew.-% mindestens eines Füllstoffes.

2. Reaktive Einkomponenten-Klebstoffzusammensetzung nach Anspruch 1, **dadurch gekennzeichnet, dass** das mindestens eine alpha-Silan-terminierte organische Polymer die Formel (I) aufweist
Y-[(CR^{1a}₂)-Si(R^{2a})_{b1}(OR^{3a})_{3-b1}]ₓ (I),
wobei
Y einen x-wertigen, über Stickstoff, Sauerstoff oder Schwefel gebundenen Polymerrest bedeutet,
R^{2a} gleich oder verschieden sein kann und einen einwertigen, gegebenenfalls substituierten, SiC-gebundenen Kohlenwasserstoffrest darstellt,
R^{1a} gleich oder verschieden sein kann und Wasserstoffatom oder einen einwertigen, gegebenenfalls substituierten Kohlenwasserstoffrest darstellt, der über Stickstoff, Phosphor, Sauerstoff, Schwefel oder Carbonylgruppe an das Kohlenstoffatom angebunden sein kann,
R^{3a} gleich oder verschieden sein kann und Wasserstoffatom oder einen einwertigen, gegebenenfalls substituierten Kohlenwasserstoffrest darstellt,
x eine ganze Zahl von 1 bis 10 ist,
b1 gleich oder verschieden sein kann und 0, 1 oder 2 ist.

3. Reaktive Einkomponenten-Klebstoffzusammensetzung nach Anspruch 1 oder 2,
**dadurch gekennzeichnet, dass** das mindestens eine alpha-Silan-terminierte organische Polymer mindestens eine Endgruppe der Formel *-X-C(=O)-N(R)-C(R¹R²)-Si(R³)ₐ(OR⁴)₃₋ₐ aufweist, wobei
X für O oder N(R) steht;
jedes R unabhängig voneinander für Wasserstoff oder einen Kohlenwasserstoffrest mit 1 bis 20 Kohlenstoffatomen steht;
R¹ und R² unabhängig voneinander für Wasserstoff oder einen Kohlenwasserstoffrest mit 1 bis 20 Kohlenstoffatomen stehen;
R³ und R⁴ unabhängig voneinander für einen Kohlenwasserstoffrest mit 1 bis 20 Kohlenstoffatomen stehen;
a für 1 oder 2 steht und
"*" die Bindung für die Anbindung an das Polymer kennzeichnet.

4. Reaktive Einkomponenten-Klebstoffzusammensetzung nach einem der Ansprüche 1 bis 3, **dadurch gekennzeichnet, dass** das mindestens eine organische Polymer ein Polyoxyalkylen, ein Kohlenwasserstoffpolymer, ein Polyurethan, ein Polyester, ein Polyamid, ein Polysiloxan, ein Polyacrylat, ein Polymethacrylat oder ein Polycarbonat ist.

5. Reaktive Einkomponenten-Klebstoffzusammensetzung nach einem der Ansprüche 1 bis 4, **dadurch gekennzeichnet, dass** das mindestens eine organische Polymer ein Polyoxyalkylen ist.

6. Reaktive Einkomponenten-Klebstoffzusammensetzung nach einem der Ansprüche 1 bis 5, **dadurch gekennzeichnet, dass** das mindestens eine Siliconharz ein Phenyl-Siliconharz ist.

7. Reaktive Einkomponenten-Klebstoffzusammensetzung nach einem der Ansprüche 1 bis 6, **dadurch gekennzeichnet, dass** das Salz des bicyclischen tertiären Amins ein Salz mit einer aliphatischen Monocarbonsäure ist, wobei die Monocarbonsäure vorzugsweise aus der Gruppe ausgewählt ist, die aus Methacrylsäure, Crotonsäure und Tiglinsäure besteht, wobei das Mischungsverhältnis vorzugsweise so eingestellt ist, dass das Molverhältnis des bicyclischen tertiären Amins zur aliphatischen Monocarbonsäure höchstens 1,3 beträgt.

8. Reaktive Einkomponenten-Klebstoffzusammensetzung nach einem der Ansprüche 1 bis 7, **dadurch gekennzeichnet, dass** das Salz ein Salz von DBU ist.

9. Reaktive Einkomponenten-Klebstoffzusammensetzung nach einem der Ansprüche 1 bis 8, **dadurch gekennzeichnet, dass** der mindestens eine Thermobeschleuniger ein Crotonsäuresalz von DBU ist.

10. Reaktive Einkomponenten-Klebstoffzusammensetzung nach einem der Ansprüche 1 bis 9, **dadurch gekennzeichnet, dass** diese bezogen auf das Gesamtgewicht der Zusammensetzung enthält:
a) 3 Gew.-% bis 90 Gew.-% des mindestens einen alpha-Silan-terminierten organischen Polymers;
b) 0 Gew.-% bis 50 Gew.-% des mindestens einen Siliconharzes;
c) 0,1 Gew.-% bis 5 Gew.-% des mindestens einen Thermobeschleunigers;
d) 0,001 Gew.-% bis 5 Gew.-% des mindestens einen niedermolekularen Silans, das eine primäre oder sekundäre Aminogruppe oder eine geblockte Aminogruppe, die zu der primären oder sekundären Aminogruppe hydrolysiert, aufweist;
e) 0 Gew.-% bis 80 Gew.-% des mindestens einen Füllstoffes.

11. Reaktive Einkomponenten-Klebstoffzusammensetzung nach einem der Ansprüche 1 bis 10, **dadurch gekennzeichnet, dass** diese bezogen auf das Gesamtgewicht der Zusammensetzung enthält:
a) 3 Gew.-% bis 50 Gew.-% des mindestens einen alpha-Silan-terminierten organischen Polymers;
b) 1 Gew.-% bis 30 Gew.-% des mindestens einen Siliconharzes;
c) 0,1 Gew.-% bis 2,5 Gew.-% des mindestens einen Thermobeschleunigers;
d) 0,01 Gew.-% bis 5 Gew.-% des mindestens einen niedermolekularen Silans, das eine primäre oder sekundäre Aminogruppe oder eine geblockte Amino gruppe, die zu der primären oder sekundären Aminogruppe hydrolysiert, aufweist;
e) 10 Gew.-% bis 80 Gew.-% des mindestens einen Füllstoffes.

12. Reaktive Einkomponenten-Klebstoffzusammensetzung nach einem der Ansprüche 1 bis 11, **dadurch gekennzeichnet, dass** diese bezogen auf das Gesamtgewicht der Zusammensetzung enthält:
a) 5 Gew.-% bis 25 Gew.-% des mindestens einen alpha-Silan-terminierten organischen Polymers;
b) 5 Gew.-% bis 20 Gew.-% des mindestens einen Siliconharzes;
c) 0,1 Gew.-% bis 1 Gew.-% des mindestens einen Thermobeschleunigers;
d) 0,1 Gew.-% bis 4 Gew.-% des mindestens einen niedermolekularen Silans, das eine primäre oder sekundäre Aminogruppe oder eine geblockte Amino gruppe, die zu der primären oder sekundären Aminogruppe hydrolysiert, aufweist;
e) 30 Gew.-% bis 80 Gew.-% des mindestens einen Füllstoffes.

13. Reaktive Einkomponenten-Klebstoffzusammensetzung nach einem der Ansprüche 1 bis 12, **dadurch gekennzeichnet, dass** diese bezogen auf das Gesamtgewicht der Zusammensetzung enthält:
a) 15 Gew.-% bis 25 Gew.-% des mindestens einen alpha-Silan-terminierten organischen Polymers;
b) 10 Gew.-% bis 12 Gew.-% des mindestens einen Siliconharzes;
c) 0,2 Gew.-% bis 0,5 Gew.-% des mindestens einen Thermobeschleunigers;
d) 1 Gew.-% bis 3 Gew.-% des mindestens einen niedermolekularen Silans, das eine primäre oder sekundäre Aminogruppe oder eine geblockte Amino gruppe, die zu der primären oder sekundären Aminogruppe hydrolysiert, aufweist;
e) 59,5 Gew.-% bis 73,8 Gew.-% des mindestens einen Füllstoffes.

14. Verfahren zur Verklebung zweier Substrate, die Schritte enthaltend
(a) Aufbringen einer reaktiven Einkomponenten-Klebstoffzusammensetzung nach einem der Ansprüche 1 bis 13 auf ein erstes Substrat zur Erzeugung einer Klebefläche,
(b) In Kontakt bringen eines zweiten Substrates mit der Klebefläche aus Schritt (a) und
(c) thermisches Aushärten der Klebstoffzusammensetzung, vorzugsweise bei einer Temperatur von mindestens 50°C.

15. Verklebtes Substratsystem aus zwei Substraten, wobei die beiden Substrate eine gemeinsame Klebefläche aufweisen, mittels derer die beiden Substrate mit Hilfe einer thermoausgehärteten Klebstoffzusammensetzung nach einem der Ansprüche 1 bis 13 verklebt sind.

## Claims

1. Reactive one-component adhesive composition which is liquid at room temperature, containing, based on the total weight of the composition,
a) 3 wt% to 90 wt% of at least one alpha-silane-terminated organic polymer;
b) 0 wt% to 80 wt% of at least one silicone resin;
c) 0.1 wt% to 5 wt% of at least one thermal accelerator, the at least one thermal accelerator being a salt of a bicyclic tertiary amine of the following formula (II): 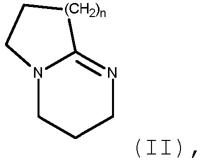 in which n is an integer from 1 to 3;
d) 0.001 wt% to 5 wt% of at least one low molecular weight silane which has a primary or secondary amino group or a blocked amino group which hydrolyzes to the primary or secondary amino group, the low molecular weight silane having a molecular weight in the range from 100 to 500 g/mol;
e) 0 wt% to 85 wt% of at least one filler.

2. Reactive one-component adhesive composition according to Claim 1, **characterized in that** the at least one alpha-silane-terminated organic polymer has the formula (I)
Y-[(CR^{1a}₂)-Si(R^{2a})_{b1}(OR^{3a})_{3-b1}]ₓ (I),
where
Y is an x-valent polymer radical bonded via nitrogen, oxygen or sulfur,
R^{2a} may be identical or different and is a monovalent, optionally substituted, SiC-bonded hydrocarbon radical, R^{1a} may be identical or different and is hydrogen atom or a monovalent, optionally substituted hydrocarbon radical which may be attached to the carbon atom via nitrogen, phosphorus, oxygen, sulfur or carbonyl group,
R^{3a} may be identical or different and is hydrogen atom or a monovalent, optionally substituted hydrocarbon radical,
x is an integer from 1 to 10,
b1 may be identical or different and is 0, 1 or 2.

3. Reactive one-component adhesive composition according to Claim 1 or 2, **characterized in that** the at least one alpha-silane-terminated organic polymer has at least one end group of the formula *-X-C(=O)-N(R)-C(R¹R²)-Si(R³)ₐ(OR⁴)₃₋ₐ, where
X is O or N(R);
each R independently of any other is hydrogen or a hydrocarbon radical having 1 to 20 carbon atoms;
R¹ and R² independently of one another are hydrogen or a hydrocarbon radical having 1 to 20 carbon atoms;
R³ and R⁴ independently of one another are a hydrocarbon radical having 1 to 20 carbon atoms;
a is 1 or 2; and
"*" marks the bond for the attachment to the polymer.

4. Reactive one-component adhesive composition according to any of Claims 1 to 3, **characterized in that** the at least one organic polymer is a polyoxyalkylene, a hydrocarbon polymer, a polyurethane, a polyester, a polyamide, a polysiloxane, a polyacrylate, a polymethacrylate or a polycarbonate.

5. Reactive one-component adhesive composition according to any of Claims 1 to 4, **characterized in that** the at least one organic polymer is a polyoxyalkylene.

6. Reactive one-component adhesive composition according to any of Claims 1 to 5, **characterized in that** the at least one silicone resin is a phenyl silicone resin.

7. Reactive one-component adhesive composition according to any of Claims 1 to 6, **characterized in that** the salt of the bicyclic tertiary amine is a salt with an aliphatic monocarboxylic acid, where the monocarboxylic acid is preferably selected from the group consisting of methacrylic acid, crotonic acid and tiglic acid, where the mixing ratio is established preferably such that the molar ratio of the bicyclic tertiary amine to the aliphatic monocarboxylic acid is at most 1.3.

8. Reactive one-component adhesive composition according to any of Claims 1 to 7, **characterized in that** the salt is a salt of DBU.

9. Reactive one-component adhesive composition according to any of Claims 1 to 8, **characterized in that** the at least one thermal accelerator is a crotonic acid salt of DBU.

10. Reactive one-component adhesive composition according to any of Claims 1 to 9, **characterized in that** it contains, based on the total weight of the composition:
a) 3 wt% to 90 wt% of the at least one alpha-silane-terminated organic polymer;
b) 0 wt% to 50 wt% of the at least one silicone resin;
c) 0.1 wt% to 5 wt% of the at least one thermal accelerator;
d) 0.001 wt% to 5 wt% of the at least one low molecular weight silane which has a primary or secondary amino group or a blocked amino group which hydrolyzes to the primary or secondary amino group;
e) 0 wt% to 80 wt% of the at least one filler.

11. Reactive one-component adhesive composition according to any of Claims 1 to 10, **characterized in that** it contains, based on the total weight of the composition:
a) 3 wt% to 50 wt% of the at least one alpha-silane-terminated organic polymer;
b) 1 wt% to 30 wt% of the at least one silicone resin;
c) 0.1 wt% to 2.5 wt% of the at least one thermal accelerator;
d) 0.01 wt% to 5 wt% of the at least one low molecular weight silane which has a primary or secondary amino group or a blocked amino group which hydrolyzes to the primary or secondary amino group;
e) 10 wt% to 80 wt% of the at least one filler.

12. Reactive one-component adhesive composition according to any of Claims 1 to 11, **characterized in that** it contains, based on the total weight of the composition:
a) 5 wt% to 25 wt% of the at least one alpha-silane-terminated organic polymer;
b) 5 wt% to 20 wt% of the at least one silicone resin;
c) 0.1 wt% to 1 wt% of the at least one thermal accelerator;
d) 0.1 wt% to 4 wt% of the at least one low molecular weight silane which has a primary or secondary amino group or a blocked amino group which hydrolyzes to the primary or secondary amino group;
e) 30 wt% to 80 wt% of the at least one filler.

13. Reactive one-component adhesive composition according to any of Claims 1 to 12, **characterized in that** it contains, based on the total weight of the composition:
a) 15 wt% to 25 wt% of the at least one alpha-silane-terminated organic polymer;
b) 10 wt% to 12 wt% of the at least one silicone resin;
c) 0.2 wt% to 0.5 wt% of the at least one thermal accelerator;
d) 1 wt% to 3 wt% of the at least one low molecular weight silane which has a primary or secondary amino group or a blocked amino group which hydrolyzes to the primary or secondary amino group;
e) 59.5 wt% to 73.8 wt% of the at least one filler.

14. Method for bonding two substrates, containing the steps of
(a) applying a reactive one-component adhesive composition according to any of Claims 1 to 13 to a first substrate, to give an adhesive area,
(b) contacting a second substrate with the adhesive area from step (a), and
(c) thermally curing the adhesive composition, preferably at a temperature of at least 50°C.

15. Bonded substrate system composed of two substrates, where the two substrates have a common adhesive area via which the two substrates are bonded using a thermally cured adhesive composition according to any of Claims 1 to 13.

## Revendications

1. Composition adhésive monocomposant réactive qui est liquide à la température ambiante et contient, par rapport au poids total de la composition
a) 3 % en poids à 90 % en poids d'au moins un polymère organique à terminaison alpha-silane ;
b) 0 % en poids à 80 % en poids d'une résine de silicone ;
c) 0,1 % en poids à 5 % en poids d'au moins un thermo-accélérateur, l'au moins un thermo-accélérateur étant un sel d'une amine tertiaire bicyclique ayant la formule (II) ci-après : 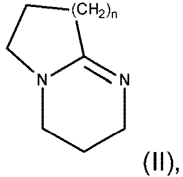 dans laquelle n représente un nombre entier de 1 à 3 ;
d) 0,001 % en poids à 5 % en poids d'au moins un silane à faible masse moléculaire, qui présente un groupe amino primaire ou secondaire ou un groupe amino bloqué qui s'hydrolyse en le groupe amino primaire ou secondaire, le silane à faible masse moléculaire présentant une masse moléculaire dans la plage de 100 à 500 g/mol ;
e) 0 % en poids à 85 % en poids d'au moins une charge.

2. Composition adhésive monocomposant réactive selon la revendication 1, **caractérisée en ce que** l'au moins un polymère organique à terminaison alpha-silane présente la formule (I)
Y-[(CR^{1a}₂)-Si(R^{2a})_{b1}(OR^{3a})_{3-b1}]ₓ (I)
dans laquelle
Y représente un radical polymère x-valent, lié par l'intermédiaire d'un azote, d'un oxygène ou d'un soufre, R^{2a} peut être identique ou différent et représente un radical hydrocarboné monovalent lié à SiC, éventuellement substitué,
R^{1a} peut être identique ou différent et représente un atome d'hydrogène ou un radical hydrocarboné monovalent éventuellement substitué, qui peut être lié à l'atome de carbone par l'intermédiaire d'un azote, d'un phosphore, d'un oxygène, d'un soufre ou d'un groupe carbonyle,
R^{3a} peut être identique ou différent et représente un atome d'hydrogène ou un radical hydrocarboné monovalent éventuellement substitué,
x représente un nombre entier de 1 à 10,
b1 peut être identique ou différent et représente 0, 1 ou 2.

3. Composition adhésive monocomposant réactive selon la revendication 1 ou 2, **caractérisée en ce que** l'au moins un polymère organique à terminaison alpha-silane présente au moins un groupe terminal de formule *-X-C(=O)-N(R)-C(R¹R²)-Si(R³)ₐ(OR⁴)₃₋ₐ, dans laquelle
X représente O ou N(R) ;
chaque R représente indépendamment les uns des autres un hydrogène ou un radical hydrocarboné ayant 1 à 20 atomes de carbone ;
R¹ et R² représentent indépendamment l'un de l'autre un hydrogène ou un radical hydrocarboné ayant 1 à 20 atomes de carbone ;
R³ et R⁴ représentent indépendamment l'un de l'autre un radical hydrocarboné ayant 1 à 20 atomes de carbone ;
a représente 1 ou 2 et
« * » caractérise la liaison pour la fixation au polymère.

4. Composition adhésive monocomposant réactive selon l'une des revendications 1 à 3, **caractérisée en ce que** l'au moins un polymère organique est un polyoxyalkylène, un polymère hydrocarboné, un polyuréthane, un polyester, un polyamide, un polysiloxane, un polyacrylate, un polyméthacrylate ou un polycarbonate.

5. Composition adhésive monocomposant réactive selon l'une des revendications 1 à 4, **caractérisée en ce que** l'au moins un polymère organique est un polyoxyalkylène.

6. Composition adhésive monocomposant réactive selon l'une des revendications 1 à 5, **caractérisée en ce que** l'au moins une résine de silicone est une résine de phényl-silicone.

7. Composition adhésive monocomposant réactive selon l'une des revendications 1 à 6, **caractérisée en ce que** le sel de l'amine tertiaire bicyclique est un sel avec un acide monocarboxylique aliphatique, l'acide monocarboxylique étant de préférence choisi dans le groupe constitué par l'acide méthacrylique, de l'acide crotonique et de l'acide tiglique, le rapport de mélange étant ajusté de préférence de façon que le rapport en moles de l'amine tertiaire bicyclique à l'acide monocarboxylique aliphatique soit d'au plus 1,3.

8. Composition adhésive monocomposant réactive selon l'une des revendications 1 à 7, **caractérisée en ce que** le sel est un sel de DBU.

9. Composition adhésive monocomposant réactive selon l'une des revendications 1 à 8, **caractérisée en ce que** l'au moins un thermo-accélérateur est un sel d'acide crotonique du DBU.

10. Composition adhésive monocomposant réactive selon l'une des revendications 1 à 9, **caractérisée en ce qu'**elle contient, par rapport au poids total de la composition :
a) 3 % en poids à 90 % en poids de l'au moins un polymère organique à terminaison alpha-silane ;
b) 0 % en poids à 50 % en poids de l'au moins une résine de silicone ;
c) 0,1 % en poids à 5 % en poids de l'au moins un thermo-accélérateur ;
d) 0,001 % en poids à 5 % en poids de l'au moins un silane à faible masse moléculaire, qui présente un groupe amino primaire ou secondaire ou un groupe amino bloqué qui s'hydrolyse en le groupe amino primaire ou secondaire ;
e) 0 % en poids à 80 % en poids de l'au moins une charge.

11. Composition adhésive monocomposant réactive selon l'une des revendications 1 à 10, **caractérisée en ce qu'**elle contient, par rapport au poids total de la composition :
a) 3 % en poids à 50 % en poids de l'au moins un polymère organique à terminaison alpha-silane ;
b) 1 % en poids à 30 % en poids de l'au moins une résine de silicone ;
c) 0,1 % en poids à 2,5 % en poids de l'au moins un thermo-accélérateur ;
d) 0,01 % en poids à 5 % en poids de l'au moins un silane à faible masse moléculaire, qui présente un groupe amino primaire ou secondaire ou un groupe amino bloqué qui s'hydrolyse en le groupe amino primaire ou secondaire ;
e) 10 % en poids à 80 % en poids de l'au moins une charge.

12. Composition adhésive monocomposant réactive selon l'une des revendications 1 à 11, **caractérisée en ce qu'**elle contient, par rapport au poids total de la composition :
a) 5 % en poids à 25 % en poids de l'au moins un polymère organique à terminaison alpha-silane ;
b) 5 % en poids à 20 % en poids de l'au moins une résine de silicone ;
c) 0,1 % en poids à 1 % en poids de l'au moins un thermo-accélérateur ;
d) 0,1 % en poids à 4 % en poids de l'au moins un silane à faible masse moléculaire, qui présente un groupe amino primaire ou secondaire ou un groupe amino bloqué qui s'hydrolyse en le groupe amino primaire ou secondaire ;
e) 30 % en poids à 80 % en poids de l'au moins une charge.

13. Composition adhésive monocomposant réactive selon l'une des revendications 1 à 12, **caractérisée en ce qu'**elle contient, par rapport au poids total de la composition :
a) 15 % en poids à 25 % en poids de l'au moins un polymère organique à terminaison alpha-silane ;
b) 10 % en poids à 12 % en poids de l'au moins une résine de silicone ;
c) 0,2 % en poids à 0,5 % en poids de l'au moins un thermo-accélérateur ;
d) 1 % en poids à 3 % en poids de l'au moins un silane à faible masse moléculaire, qui présente un groupe amino primaire ou secondaire ou un groupe amino bloqué qui s'hydrolyse en le groupe amino primaire ou secondaire ;
e) 59,5 % en poids à 73,8 % en poids de l'au moins une charge.

14. Procédé pour coller deux substrats, contenant les étapes suivantes :
(a) application d'une composition adhésive monocomposant réactive selon l'une des revendications 1 à 13 sur un premier substrat pour former une surface à coller,
(b) mise en contact d'un deuxième substrat avec la surface à coller de l'étape (a) et
(c) durcissement thermique de la composition adhésive, de préférence à une température d'au moins 50 °C.

15. Système de substrats collés constitué de deux substrats, les deux substrats présentant une surface à coller commune, avec laquelle les deux substrats sont collés à l'aide d'une composition adhésive thermodurcie selon l'une des revendications 1 à 13.
